# DEMANDE DE BREVET EUROPEEN

(11) **EP 1 008 793 A2**
(43) Date de publication de la demande: **14.06.2000**
(21) Numéro de dépôt: 99870248.4
(22) Date de dépôt: 03.12.1999
(51) Int. Cl.: F16L 3/04, F24D 3/14

(54) **Attache ressort pour la fixation des tubes ou câbles électriques dans le fond d'une rainure réalisée dans le mur, sol ou plafond**

(30) Priorité: 08.12.1998 BE 9800884
(71) Demandeur: Faraeff, Georges, 1082 Bruxelles (BE)
(72) Inventeur: Faraeff, Georges, 1082 Bruxelles (BE)

(57) **Abrégé**

L'encastrement des tubes et câbles électriques dans les bâtiments nécessite le rainurage des murs au fond desquels seront logés et fixés les susdits câbles et tubes avant le plâtrage.
La fixation au fond de la rainure de ces tubes et câbles, est indispensable afin de les empêcher de ressortir de leur logement.
A l'heure actuelle cette fixation se fait à l'aide d'un outillage, ce qui entraîne un temps considérable consacré à cette tâche.
Pour pallier à tous ces inconvénients l'attache-ressort a des avantages multiples pour ce type de fixation, grâce à ses propriétés d'extension et à ses pointes acérées dirigées vers l'extérieur, qui permettent l'ancrage efficace des tubes et câbles au fond le la rainure d'une part, et sa pose facile et rapide d'autre part. Aucun outillage n'est nécessaire pour la pose de l'attache-ressort.
L'attache-ressort sera réalisé dans toutes les dimensions, afin qu'elle puisse fixer simultanément plusieurs tubes ou câbles quel qu'en soient le diamètre.

## Description

L'objet de cette invention est une attache-ressort qui trouvera son utilisation dans le domaine du bâtiment, et en général pour la fixation des tubes et câbles électriques, dans le fond d'une rainure réalisée dans les murs, sols et plafonds, et c'est après la fixation de ceux-ci que le plâtrage peut être effectué avec la certitude que les tubes et câbles soient parfaitement encastrés et ce sans dépasser de la sueface initiale.

Lorsequ'une installation électrique doit être entèrement encastrée, on a recours au rainurage en forme de U, que ce soit dans les murs, sols ou plafonds, afin d'y loger les tubes ou câbles électriques.

C'est à ce stade qu'intervient efficacement l'utilisation de cette attache-ressort, car les câbles et tubes flexibles ont une tendance naturelle de se cabrer tout le long du trajet de la rainure, et de tomber s'il s'agit d'un mur ou d'un plafond.

En pinçant l'attache-ressort on l'introduit dans le fond de la rainure emprisonnant ainsi le tube ou câble électrique, et la fixation est assurée, grâce à son effet ressort d'une part, qui provoque une extension de l'attache et lui confère ainsi une pression sur les parties latérales de la rainure, et les griffes empêchent l'attache-ressort de ressortir d'autre part.

Le tube ou le câble électrique étant ainsi emprisonné et forcé de rester dans le fond de la rainure, on peut réaliser le reboucheage parfait de la rainure sans effort et sans perte de temps.

Ce système d'attache-ressort, présente l'avantage de la pose et fixation rapide, aisé, efficace et sans outil, dans n'importe quelles rainures, réalisée dans le béton ou la brique.

Par rapport à la méthode actuelle qui consiste à essayer de fixer les tubes et câbles électriques dans le fond des rainures à l'aide des clous, cette attache-ressort présente un avantage certain, car les clous en acier ne pénètrent pas le béton ni la brique dur et de ce fait l'on doit avoir recours à la perceuse, chevilles et enfin aux vis pour exécuter ce travail de fixation, d'ou le ralongement considérable du temps pour ce travail.

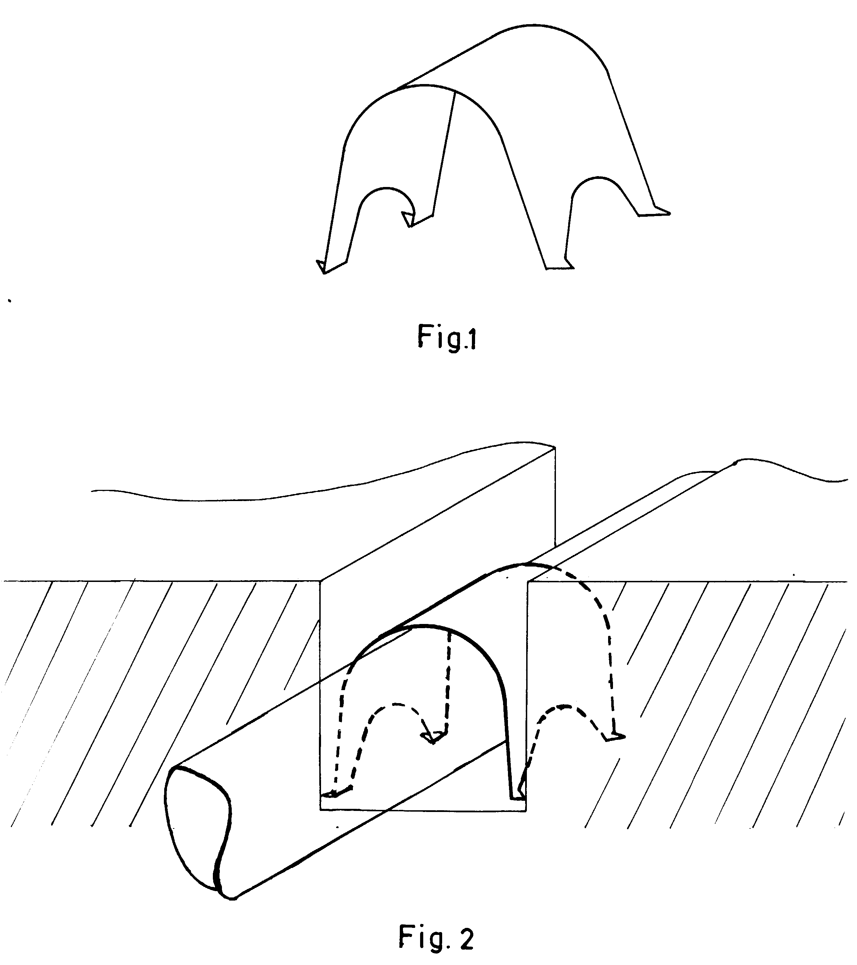

La figure 1 montre l'attache-ressort en position de repos, et la figure 2 représente l'attache-ressort posée dans le fond de la rainure emprisonnant le tube ou câble électrique.

Pour faire face aux différentes applications dans le bâtiment, l'attache-ressort sera réalisée aux dimensions qui lui permettront de fixer simultanément plussieurs tubes ou câbles électriques et cela quel qu'en soit le diamètre.

## Revendications

1. L'attache-ressort destiné à la fixation des tubes ou câbles électriques dans le fond d'une rainure se présente en forme de U légèrement ouvert en position de repos avec, à ses extrémités, des pointes acéreés pliées vers l'extérieur des branches du U - figure 1 et 2, et en forme de U normal lorseque l'attache est engagée dans la rainure - figure 2.

2. L'attache suivant revendication 1, se caractérise par le fait que le matériau dont elle est constituée lui confère la propriété de ressort, et de ce fait l'attache engagée dans la rainure se maintient solidement au fond de celle-ci grâce à son pouvoir d'extension d'une part, et à ses crochets acérés d'autre part.

3. L'attache en forme de U - figure 1 et 2, suivant revendication 1 et 2, se caractérise par ses pointes acérées pliées vers l'extérieur, au bout des branches du U qui, conjointement avec l'effet ressort, lui permettent un ancrage efficace dans la rainure.
